# EUROPEAN PATENT APPLICATION

(11) **EP 2 218 820 A1**
(43) Date of publication of application: **18.08.2010**
(21) Application number: 08838565.3
(22) Date of filing: 27.08.2008
(51) Int. Cl.: D06P 1/52, D06M 15/507, D06M 15/53, D06P 1/613, D06P 3/54, D06M 101/32

(54) **DYEABILITY IMPROVER FOR POLYESTER FIBER MATERIAL**

(30) Priority: 12.11.2007 JP 2007293053
(71) Applicant: NICCA CHEMICAL CO., LTD., Fukui-shi, Fukui 910-8670 (JP)
(72) Inventor: HOSODA, Masaaki, Fukui-shi Fukui 910-8670 (JP); HAYASHI, Masatoshi, Fukui-shi Fukui 910-8670 (JP)
(74) Representative: Bates, Philip Ian
(86) International application number: PCT/JP2008/065797
(87) International publication number: WO 2009/063680

(57) **Abstract**

The invention provides a dyeing quality improver for polyester-based fiber materials **characterized by** comprising a polyester copolymer, obtained by polycondensation of a dibasic acid component containing a dibasic acid with a sulfonate group in an amount of 15-65 mol% and a dihydric alcohol component containing polyethylene glycol with a molecular weight of 900-3500, having a molecular weight of 3000-30,000 and containing polyoxyethylene chains in the molecule in an amount of 10-40 mass%, and at least one compound selected from among styrenated phenolalkylene oxide addition products and higher alcohol alkylene oxide addition products. It is possible to solve the problem of adhesion of polyester oligomers and the problems of dye contamination and foreign matter contamination, during dyeing of polyester-based fiber materials.

## Description

### Technical Field

The present invention relates to a dyeing quality improver that is suitable for polyester fiber materials and for polyester-based fiber materials composed of composite materials comprising polyester fiber materials and other fiber materials.

### Background Art

Dyeing of polyester fiber materials, and polyester-based fiber materials composed of composite materials comprising them with other fiber materials, has been associated with frequent problems that include problems arising from the polyester oligomers, problems of dye contamination and problems of foreign matter contamination.

Polyester-based fiber materials are dyed under high-temperature conditions of usually 100-140°C, and this causes the polyester oligomers to elute from the polyester-based fiber material into the fiber surfaces or dyeing bath, adhering not only onto the fiber surfaces but also onto the dyeing machine parts such as the dyeing machine frame and the heat exchanger, thus resulting in problems, including notable lowering of the quality of the obtained fiber product and more difficult control of the operation for raising and lowering of the temperature during the dyeing step.

The problem of dye contamination occurs when a polyester-based fiber material that has not been sufficiently scoured before dyeing is introduced into the dyeing bath, and the oil solutions, sizing agents, waxes and the like adhering to the fiber material elute into the dyeing bath, resulting in reduced dispersibility of the dye and formation of its aggregates, and adhesion of the dye aggregates onto the fiber product. Polyester-based fiber materials that have not been sufficiently scoured are also associated with problems in terms of the level dyeing property, such that the dyeing results in color irregularities.

The problem of foreign matter contamination is that treatment of functional agents such as light fastness enhancers or flameproofing agents in the same bath as the dyeing bath produces contamination, due to fiber surface residue of functional agents that have not been taken up into the fiber material.

In order to solve the oligomer-related problems, methods have been adopted that involve adding dyeing quality improvers to the dyeing bath or to the reduction/cleaning bath after dyeing.

For example, Japanese Unexamined Patent Publication No. 2000-154466 discloses a method of preventing the trouble caused by adhesion of oligomers, by adding to the dyeing bath an oligomer removing agent comprising a sulfonic acid salt of polyoxyethylene styrylphenyl ether, and a carboxyl group-containing polymer such as an acrylic acid or methacrylic acid polymer, or a salt thereof.

Also, Japanese Unexamined Patent Publication No. 2001-159083 discloses a method of minimizing the adverse effects of polyester decomposition products, by adding to the dyeing bath a dyeing aid comprising as an active component one or more agents selected from the group consisting of chelating phosphonate agents, phosphonic acid salt-based chelating agents, polycarboxylic acid-based chelating agents and polycarboxylic acid salt-based chelating agents.

In addition, Japanese Unexamined Patent Publication No. 2001-295136 discloses a method of preventing elution of oligomers by adding to the dyeing bath during the dyeing step an oligomer preventer containing the esterified product of a polyhydric alcohol alkylene oxide addition product and an alkyl or alkenyl fatty acid, or an esterified product obtained by transesterification of a polyhydric alcohol alkylene oxide addition product and a natural animal or vegetable oil thereof comprising an alkyl or alkenyl fatty acid. However, the polyester oligomer removing effect is low even with addition of such oligomer removing agents or preventing agents, and it is not possible at the current time to achieve a satisfactory oligomer removing effect, especially with acidic baths.

Methods of adding scouring agents to dyeing baths have also been implemented in the prior art to counter the problem of dye contamination. Higher alcohol alkylene oxide addition products are generally used as scouring agents, but because their scouring effects are minimal in acidic baths and they tend to inhibit dye dispersibility at high temperatures, it has not been possible to satisfactorily prevent the problem of dye contamination. For the problem of foreign matter contamination, functional drugs are sometimes dispersed in various anionic surfactants in an attempt to achieve stabilization in the dyeing bath, but this has not constituted a solution to the problem.

### Disclosure of the Invention

It is an object of the present invention to provide a dyeing quality improver for polyester-based fiber materials that is able to overcome the problems caused by deposition of polyester oligomers and the problems of dye contamination and foreign matter contamination that occur when they are added to the dyeing bath in the dyeing step for a fiber material comprising a polyester fiber material or a composite of a polyester fiber material with other fiber materials.

As a result of much diligent research with the aim of solving the aforementioned problems, the present inventors have found that by combining a polyester copolymer obtained by polycondensation of a dibasic acid component, containing a fixed amount of a dibasic acid with a sulfonate group, and a dihydric alcohol component, containing a fixed amount of polyethylene glycol, with a styrenated phenolalkylene oxide addition product and/or a higher alcohol alkylene oxide addition product, it is possible to solve the problems of oligomer adhesion during the dyeing step and the problems of dye contamination and foreign matter contamination, and the present invention has been completed based on this finding.

Specifically, the invention provides a dyeing quality improver for polyester-based fiber materials characterized by comprising a polyester copolymer, obtained by polycondensation of a dibasic acid component containing a dibasic acid with a sulfonate group in an amount of 15-65 mol% and a dihydric alcohol component containing polyethylene glycol with a molecular weight of 900-3500, having a molecular weight of 3000-30,000 and containing polyoxyethylene chains in the molecule in an amount of 10-40 mass%, and at least one compound selected from among styrenated phenolalkylene oxide addition products and higher alcohol alkylene oxide addition products.

Since the polyester copolymer in the dyeing quality improver for polyester-based fiber materials according to the invention has excellent affinity for polyester fibers, it can incorporate the residual polyester oligomer on fiber surfaces as well as lubricants, sizing agents and functional drugs such as light fastness enhancers or flameproofing agents, by a synergistic effect, to a greater extent than when using the other component (a styrenated phenolalkylene oxide addition product or higher alcohol alkylene oxide addition product) alone.

Moreover, because the polyester copolymer has a controlled molecular weight it is detached easily from polyester fibers, and therefore the polyester oligomer, as well as lubricants, sizing agents and functional drugs such as light fastness enhancers and flameproofing agents, can be retained in water.

In addition, since the polyester copolymer in the dyeing quality improver of the invention contains a sulfonate group, it does not become redeposited on the fiber material or dyeing machine, and therefore the improver can be suitably used in dyeing steps.

### Best Mode for Carrying Out the Invention

Preferred embodiments of the invention will now be explained in detail with the understanding that the invention is not limited only to these embodiments, and various modifications may be implemented that are within the spirit and scope of the invention.

The dyeing quality improver for polyester-based fiber materials according to the invention is characterized by comprising (A) a polyester copolymer, obtained by polycondensation of a dibasic acid component containing a dibasic acid with a sulfonate group in an amount of 15-65 mol% and a dihydric alcohol component containing polyethylene glycol with a molecular weight of 900-3500, and (B) at least one compound selected from among styrenated phenolalkylene oxide addition products and higher alcohol alkylene oxide addition products.

Preferred sulfonate group-containing dibasic acids for synthesis of polyester-based copolymers used for the invention include metal salts of sulfoterephthalic acid, 5-sulfoisophthalic acid and 4-sulfophthalic acid, and their ester derivatives such as dimethyl ester, diethyl ester and diphenyl esters. As metal salts there may be mentioned lithium salts, sodium salts, potassium salts and magnesium salts, among which sodium and potassium salts are preferred.

The content of the sulfonate group-containing dibasic acid in the dibasic acid component is in the range of 15-65 mol%. The removing power for polyester oligomers, lubricants, sizing agents and functional agents will be impaired if the sulfonate group-containing dibasic acid is present at less than 15 mol% in the dibasic acid component. This is believed to be because a low sulfonate group content lowers the dispersibility of polyester oligomers, lubricants, sizing agents and functional agents, leading to their redeposition in the fiber material. On the other hand, a content exceeding 65 mol% will impede polycondensation reaction of the polyester copolymer.

As dibasic acids other than sulfonate group-containing dibasic acids to be included in the dibasic acid component used for copolymerization, there may be mentioned aromatic carboxylic acids such as terephthalic acid, isophthalic acid, naphthalenedicarboxylic acid, diphenyldicarboxylic acid, diphenoxyethanedicarboxylic acid, β-hydroxyethoxybenzoic acid and p-hydroxybenzoic acid or aliphatic carboxylic acids such as adipic acid, sebacic acid, maleic acid and succinic acid, and their acid anhydrides or ester derivatives with lower alcohols or glycols may also be used.

The dihydric alcohol component as the other starting material for synthesis of the polyester copolymer contains polyethylene glycol with a molecular weight of 900-3500. A molecular weight of less than 900 for the polyethylene glycol will tend to lower the removing power for polyester oligomers, lubricants, sizing agents and functional agents, while a molecular weight of greater than 3500 will tend to impair the dispersibility of the disperse dye. The polyester copolymer also contains 10-40 mass% polyoxyethylene chains derived from the polyethylene glycol. A polyoxyethylene chain content of less than 10 mass% will tend to reduce the removing power for polyester oligomers, lubricants, sizing agents, functional agents and the like, while a polyoxyethylene chain content of greater than 40 mass% will lead to increased occurrence of problems such as insufficient disperse dye dispersibility and high foamability during the dyeing process.

Ethylene glycol is preferred as a dihydric alcohol other than the polyethylene glycol in the dihydric alcohol component used for synthesis of the polyester copolymer, but there may also be used other aliphatic and aromatic diol compounds such as C3 or greater alkylene glycols, neopentyl glycol, bisphenol A, bisphenol S and the like.

The polyester copolymer used for the dyeing quality improver of the invention has a molecular weight of 3000-30,000. According to the invention, a molecular weight of less than 3000 will tend to lower the removing power for polyester oligomers, lubricants, sizing agents and functional agents, presumably because the affinity of the polyester copolymer for the polyester-based fiber material is lowered. A molecular weight of greater than 30,000 will increase the amount of dyeing quality improver residue on the polyester-based fiber material, thus risking an adverse effect in the subsequent finishing step.

The dyeing quality improver of the invention comprising a polyester copolymer, that satisfies the aforementioned content of sulfonate group-containing dibasic acids, and the content and molecular weight of polyoxyethylene chains derived from the polyethylene glycol with a molecular weight of 900-3500, has excellent removability for polyester oligomers, lubricants, sizing agents and functional agents from polyester-based fiber materials, and undergoes minimal redepositing onto polyester fiber materials and dyeing machines.

The process for producing the polyester copolymer of the invention may be any conventional process such as transesterification or direct polymerization, without any particular restrictions.

The molecular weight, according to the invention, refers to the weight-average molecular weight measured by gel permeation chromatography using an HLC-8120 apparatus (product of Tosoh Corp.), Column: GF310HQ (product of Shodex), and using 50% (v/v) acetonitrile/water as the mobile phase, and using sodium polystyrene sulfonate as the standard substance.

The dyeing quality improver of the invention contains, in addition to the aforementioned polyester copolymer, one or more compounds selected from the group consisting of styrenated phenolalkylene oxide addition products and higher alcohol alkylene oxide addition products.

According to the invention, the styrenated phenolalkylene oxide addition product may be a polystyrenated (2-10 mol)phenolalkylene oxide addition product such as a monostyrenated phenolalkylene oxide addition product, distyrenated phenolalkylene oxide addition product or tristyrenated phenolalkylene oxide addition product. The number of moles for addition of styrene is preferably 1-5 mol for satisfactory affinity with polyester fibers. The higher alcohol in the higher alcohol alkylene oxide addition product is preferably a C8-18 alcohol for more satisfactory affinity with polyester fibers. The higher alcohol may be either saturated or unsaturated.

For both styrenated phenolalkylene oxide addition products and higher alcohol alkylene oxide addition products, the form of addition is preferably simple addition of ethylene oxide or random or block addition of ethylene oxide and propylene oxide. In the case of addition of ethylene oxide and propylene oxide, the proportion of ethylene oxide units among the total alkylene oxide chains is preferably 60-100 mass%. If the proportion of ethylene oxide units is less than 60 mass%, it will tend to be more difficult to remove the lubricant. The number of moles for addition of alkylene oxides is preferably 4-30 mol and more preferably 4-20 mol each. If the number of moles of addition is less than 4 mol the removability for lubricants, sizing agents and functional agents will tend to be impaired, while if it exceeds 30 mol the effect of the hydrophobic groups of the alkylene oxide addition product will be lessened, thus tending to lower the affinity for polyester fibers and lubricants. The alkylene oxide addition products mentioned above may be produced by processes known in the art.

According to the invention, the mass of the polyester copolymer is preferably 0.5-10 and more preferably 1-10, with respect to the total mass of the styrenated phenolalkylene oxide addition product and higher alcohol alkylene oxide addition product defined as 1, for admixture to obtain the dyeing quality improver. Water or a mixture of water and a lower alcohol may be used as the solvent.

Polyester-based fiber materials to which the dyeing quality improver of the invention may be applied include polyethylene terephthalate, polybutylene terephthalate, polypropylene terephthalate, polytrimethylene terephthalate and polyester fiber materials composed of copolymers comprising the same, as well as composite fiber materials comprising these polyester fiber materials and other synthetic fiber materials, natural fiber materials or regenerated fiber materials, and they may be in the form of yarns, knitted fabrics, woven fabrics, nonwoven fabrics and the like.

A dyeing quality improver for polyester-based fiber materials according to the invention may be added to the dyeing bath when such polyester-based fiber materials are dyed. The amount of dyeing quality improver used may be appropriately adjusted depending on the type of fiber material or dye and on the desired performance. The dyeing process may be jet dyeing or a dip dyeing method such as cheese dyeing, beam dyeing, Obermaier dyeing, high-pressure injection dyeing or the like, and any process may be employed without any particular restrictions so long as it allows the object of the invention to be achieved.

The invention will now be explained in greater detail using examples, with the understanding that the invention is in no way limited in scope by the examples.

### Synthesis Example 1

After charging 116.4 g (0.6 mol) of dimethyl terephthalate, 118.4 g (0.4 mol) of dimethyl 5-sulfoisophthalate sodium salt, 57 g of ethylene glycol, 86 g of polyethylene glycol with a molecular weight of 1000 and 0.1 g of zinc acetate into a reactor, the temperature was raised from 150°C to 230°C over a period of about 3 hours while agitating under a nitrogen gas atmosphere for transesterification, and the methanol was distilled out of the system. Next, 0.1 g of tetrabutyl titanate was added, the pressure was gradually reduced, and when the internal pressure reached approximately 10 kPa, reaction was conducted at 250°C for 2 hours to obtain 314 g of a polyester copolymer. The polyoxyethylene chain content of the obtained polyester copolymer was approximately 27 mass%, and the molecular weight was 12,000.

### Synthesis Example 2

The same procedure was carried out as in Example 1, except that 155.2 g (0.8 mol) of dimethyl terephthalate, 59.2 g (0.2 mol) of dimethyl 5-sulfoisophthalate sodium salt, 58 g of ethylene glycol, 131 g of polyethylene glycol with a molecular weight of 2000 and 0.1 g of zinc acetate were charged into the reactor, to obtain 340 g of a polyester copolymer. The polyoxyethylene chain content of the obtained polyester copolymer was approximately 38 mass%, and the molecular weight was 22,000.

### Synthesis Example 3

The same procedure was carried out as in Example 1, except that 135.8 g (0.7 mol) of dimethyl terephthalate, 88.8 g (0.3 mol) of dimethyl 5-sulfoisophthalate sodium salt, 54 g of ethylene glycol, 136 g of polyethylene glycol with a molecular weight of 1000 and 0.1 g of zinc acetate were charged into the reactor, to obtain 350 g of a polyester copolymer. The polyoxyethylene chain content of the obtained polyester copolymer was approximately 38 mass%, and the molecular weight was 5000.

### Synthesis Example 4

The same procedure was carried out as in Example 1, except that 97 g (0.5 mol) of dimethyl terephthalate, 148 g (0.5 mol) of dimethyl 5-sulfoisophthalate sodium salt, 61 g of ethylene glycol, 38 g of polyethylene glycol with a molecular weight of 2000 and 0.1 g of zinc acetate were charged into the reactor, to obtain 280 g of a polyester copolymer. The polyoxyethylene chain content of the obtained polyester copolymer was approximately 13 mass%, and the molecular weight was 9000.

### Synthesis Example 5

The same procedure was carried out as in Example 1, except that 77.6 g (0.4 mol) of dimethyl terephthalate, 177.6 g (0.6 mol) of dimethyl 5-sulfoisophthalate sodium salt, 60, g of ethylene glycol, 39 g of polyethylene glycol with a molecular weight of 1000 and 0.1 g of zinc acetate were charged into the reactor, to obtain 290 g of a polyester copolymer. The polyoxyethylene chain content of the obtained polyester copolymer was approximately 13 mass%, and the molecular weight was 3000.

### Synthesis Example 6

The same procedure was carried out as in Example 1, except that 116.4 g (0.6 mol) of dimethyl terephthalate, 118.4 g (0.4 mol) of dimethyl 5-sulfoisophthalate sodium salt, 61 g of ethylene glycol, 83 g of polyethylene glycol with a molecular weight of 3000 and 0.1 g of zinc acetate were charged into the reactor, to obtain 315 g of a polyester copolymer. The polyoxyethylene chain content of the obtained polyester copolymer was approximately 26 mass%, and the molecular weight was 18,000.

### Synthesis Example 7

The same procedure was carried out as in Example 1, except that 129.6 g (0.6 mol) of 1,8-naphthalenedicarboxylic acid, 118.4 g (0.4 mol) of dimethyl 5-sulfoisophthalate sodium salt, 57 g of ethylene glycol, 85 g of polyethylene glycol with a molecular weight of 1000 and 0.1 g of zinc acetate were charged into the reactor, to obtain 343 g of a polyester copolymer. The polyoxyethylene chain content of the obtained polyester copolymer was approximately 24 mass%, and the molecular weight was 25,000.

### Synthesis Example 8

The same procedure was carried out as in Example 1, except that 58.8 g (0.6 mol) of maleic anhydride, 118.4 g (0.4 mol) of dimethyl 5-sulfoisophthalate sodium salt, 58 g of ethylene glycol, 68 g of polyethylene glycol with a molecular weight of 1000 and 0.1 g of zinc acetate were charged into the reactor, to obtain 267 g of a polyester copolymer. The polyoxyethylene chain content of the obtained polyester copolymer was approximately 25 mass%, and the molecular weight was 7000.

### Synthesis Example 9

The same procedure was carried out as in Example 1, except that 116.4 g (0.6 mol) of dimethyl terephthalate, 118.4 g (0.4 mol) of dimethyl 5-sulfoisophthalate sodium salt, 83 g of 1,4-butanediol, 83 g of polyethylene glycol with a molecular weight of 1000 and 0.1 g of zinc acetate were charged into the reactor, to obtain 337 g of a polyester copolymer. The polyoxyethylene chain content of the obtained polyester copolymer was approximately 24 mass%, and the molecular weight was 10,000.

### Synthesis Example 10

The same procedure was carried out as in Example 1, except that 116.4 g (0.6 mol) of dimethyl terephthalate, 118.4 g (0.4 mol) of dimethyl 5-sulfoisophthalate sodium salt, 96 g of neopentyl glycol, 83 g of polyethylene glycol with a molecular weight of 1000 and 0.1 g of zinc acetate were charged into the reactor, to obtain 350 g of a polyester copolymer. The polyoxyethylene chain content of the obtained polyester copolymer was approximately 23 mass%, and the molecular weight was 28,000.

### Synthesis Example 11

The same procedure was carried out as in Example 1, except that 116.4 g (0.6 mol) of dimethyl terephthalate, 118.4 g (0.4 mol) of dimethyl 5-sulfoisophthalate sodium salt, 310 g of a 2 molar ethylene oxide adduct of bisphenol S, 83 g of polyethylene glycol with a molecular weight of 1000 and 0.1 g of zinc acetate were charged into the reactor, to obtain 564 g of a polyester copolymer. The polyoxyethylene chain content of the obtained polyester copolymer was approximately 14 mass%, and the molecular weight was 30,000.

### Synthesis Example 12

The same procedure was carried out as in Example 1, except that 116.4 g (0.6 mol) of dimethyl terephthalate, 124.8 g (0.4 mol) of dimethyl 5-sulfoisophthalate potassium salt, 57 g of ethylene glycol, 86 g of polyethylene glycol with a molecular weight of 1000 and 0.1 g of zinc acetate were charged into the reactor, to obtain 320 g of a polyester copolymer. The polyoxyethylene chain content of the obtained polyester copolymer was approximately 26 mass%, and the molecular weight was 13,000.

### Synthesis Example 13

The same procedure was carried out as in Synthesis Example 1, except that 116.4 g (0.6 mol) of dimethyl terephthalate, 118.4 g (0.4 mol) of dimethyl sulfoterephthalate sodium salt, 57 g of ethylene glycol, 86 g of polyethylene glycol with a molecular weight of 1000 and 0.1 g of zinc acetate were charged into the reactor, to obtain 314 g of a polyester copolymer. The polyoxyethylene chain content of the obtained polyester copolymer was approximately 27 mass%, and the molecular weight was 13,000.

### Synthesis Example 14

The same procedure was carried out as in Synthesis Example 1, except that 116.4 g (0.6 mol) of dimethyl terephthalate, 124.8 g (0.4 mol) of dimethyl sulfoterephthalate potassium salt, 57 g of ethylene glycol, 86 g of polyethylene glycol with a molecular weight of 1000 and 0.1 g of zinc acetate were charged into the reactor, to obtain 320 g of a polyester copolymer. The polyoxyethylene chain content of the obtained polyester copolymer was approximately 26 mass%, and the molecular weight was 14,000.

### Synthesis Example 15

The same procedure was carried out as in Synthesis Example 1, except that 116.4 g (0.6 mol) of dimethyl terephthalate, 129.6 g (0.4 mol) of diethyl 4-sulfophthalate sodium salt, 57 g of ethylene glycol, 86 g of polyethylene glycol with a molecular weight of 1000 and 0.1 g of zinc acetate were charged into the reactor, to obtain 297 g of a polyester copolymer. The polyoxyethylene chain content of the obtained polyester copolymer was approximately 28 mass%, and the molecular weight was 8000.

### Synthesis Example 16

The same procedure was carried out as in Synthesis Example 1, except that 116.4 g (0.6 mol) of dimethyl terephthalate, 136.0 g (0.4 mol) of diethyl 4-sulfophthalate potassium salt, 57 g of ethylene glycol, 86 g of polyethylene glycol with a molecular weight of 1000 and 0.1 g of zinc acetate were charged into the reactor, to obtain 303 g of a polyester copolymer. The polyoxyethylene chain content of the obtained polyester copolymer was approximately 27 mass%, and the molecular weight was 9000.

### Comparative Synthesis Example 1

The same procedure was carried out as in Synthesis Example 1, except that 174.6 g (0.9 mol) of dimethyl terephthalate, 29.6 g (0.1 mol) of dimethyl 5-sulfoisophthalate sodium salt, 58 g of ethylene glycol, 74 g of polyethylene glycol with a molecular weight of 1000 and 0.1 g of zinc acetate were charged into the reactor, to obtain 272 g of a polyester copolymer. The polyoxyethylene chain content of the obtained polyester copolymer was approximately 26 mass%, and the molecular weight was 20,000.

### Comparative Synthesis Example 2

After charging 58.2 g (0.3 mol) of dimethyl terephthalate, 207.2 g (0.7 mol) of dimethyl 5-sulfoisophthalate sodium salt, 60 g of ethylene glycol, 90 g of polyethylene glycol with a molecular weight of 2000 and 0.1 g of zinc acetate into a reactor, the temperature was raised from 150°C to 230°C over a period of about 3 hours while agitating under a nitrogen gas atmosphere for transesterification, and the methanol was distilled out of the system. Next, 0.1 g of tetrabutyl titanate was added and the pressure was gradually reduced, but stirring became impossible when the internal pressure reached approximately 30 kPa, and the reaction could not be continued.

### Comparative Synthesis Example 3

The same procedure was carried out as in Synthesis Example 1, except that 116.4 g (0.6 mol) of dimethyl terephthalate, 118.4 g (0.4 mol) of dimethyl 5-sulfoisophthalate sodium salt, 56 g of ethylene glycol, 83 g of polyethylene glycol with a molecular weight of 800 and 0.1 g of zinc acetate were charged into the reactor, to obtain 310 g of a polyester copolymer. The polyoxyethylene chain content of the obtained polyester copolymer was approximately 26 mass%, and the molecular weight was 9000.

### Comparative Synthesis Example 4

The same procedure was carried out as in Synthesis Example 1, except that 116.4 g (0.6 mol) of dimethyl terephthalate, 118.4 g (0.4 mol) of dimethyl 5-sulfoisophthalate sodium salt, 61 g of ethylene glycol, 83 g of polyethylene glycol with a molecular weight of 4000 and 0.1 g of zinc acetate were charged into the reactor, to obtain 315 g of a polyester copolymer. The polyoxyethylene chain content of the obtained polyester copolymer was approximately 26 mass%, and the molecular weight was 12,000.

### Comparative Synthesis Example 5

After charging 116.4 g (0.6 mol) of dimethyl terephthalate, 118.4 g (0.4 mol) of dimethyl 5-sulfoisophthalate sodium salt, 62 g of ethylene glycol, 24 g of polyethylene glycol with a molecular weight of 2000 and 0.1 g of zinc acetate into a reactor, the temperature was raised from 150°C to 230°C over a period of about 3 hours while agitating under a nitrogen gas atmosphere for transesterification, and the methanol was distilled out of the system. Next, 0.1 g of tetrabutyl titanate was added and the pressure was gradually reduced, but stirring became impossible when the internal pressure reached approximately 40 kPa, and the reaction could not be continued.

### Comparative Synthesis Example 6

The same procedure was carried out as in Synthesis Example 1, except that 116.4 g (0.6 mol) of dimethyl terephthalate, 118.4 g (0.4 mol) of dimethyl 5-sulfoisophthalate sodium salt, 49 g of ethylene glycol, 218 g of polyethylene glycol with a molecular weight of 1000 and 0.1 g of zinc acetate were charged into the reactor, to obtain 438 g of a polyester copolymer. The polyoxyethylene chain content of the obtained polyester copolymer was approximately 48 mass%, and the molecular weight was 16,000.

### Comparative Synthesis Example 7

After charging 116.4 g (0.6 mol) of dimethyl terephthalate, 118.4 g (0.4 mol) of dimethyl 5-sulfoisophthalate sodium salt, 57 g of ethylene glycol, 83 g of polyethylene glycol with a molecular weight of 1000 and 0.1 g of zinc acetate into a reactor, the temperature was raised from 150°C to 230°C over a period of about 3 hours while agitating under a nitrogen gas atmosphere for transesterification, and the methanol was distilled out of the system. Next, 0.1 g of tetrabutyl titanate was added, the pressure was gradually reduced, and when the internal pressure reached approximately 30 kPa, reaction was terminated and the mixture was cooled to obtain 312 g of a polyester copolymer. The polyoxyethylene chain content of the obtained polyester copolymer was approximately 26 mass%, and the molecular weight was 2300.

### Comparative Synthesis Example 8

After charging 116.4 g (0.6 mol) of dimethyl terephthalate, 118.4 g (0.4 mol) of dimethyl 5-sulfoisophthalate sodium salt, 57 g of ethylene glycol, 83 g of polyethylene glycol with a molecular weight of 1000 and 0.1 g of zinc acetate into a reactor, the temperature was raised from 150°C to 230°C over a period of about 3 hours while agitating under a nitrogen gas atmosphere for transesterification, and the methanol was distilled out of the system. Next, 0.1 g of tetrabutyl titanate was added, the pressure was gradually reduced, and when the internal pressure reached approximately 9 kPa, reaction was conducted at 250°C for 5 hours to obtain 311 g of a polyester copolymer. The polyoxyethylene chain content of the obtained polyester copolymer was approximately 26 mass%, and the molecular weight was 34,000.

The results of synthesizing these polyester copolymers are summarized in Table 1.

**Table 1**

| | Sulfonate group component /total dibasic acid component (mol%) | Polyoxyethylene chain content (mass%) | Molecular weight |
|---|---|---|---|
| Synthesis Example 1 | 40 | 27 | 12,000 |
| Synthesis Example 2 | 20 | 38 | 22,000 |
| Synthesis Example 3 | 30 | 38 | 5000 |
| Synthesis Example 4 | 50 | 13 | 9000 |
| Synthesis Example 5 | 60 | 13 | 3000 |
| Synthesis Example 6 | 40 | 26 | 18,000 |
| Synthesis Example 7 | 40 | 24 | 25,000 |
| Synthesis Example 8 | 40 | 25 | 7000 |
| Synthesis Example 9 | 40 | 24 | 10,000 |
| Synthesis Example 10 | 40 | 23 | 28,000 |
| Synthesis Example 11 | 40 | 14 | 30,000 |
| Synthesis Example 12 | 40 | 26 | 13,000 |
| Synthesis Example 13 | 40 | 27 | 13,000 |
| Synthesis Example 14 | 40 | 26 | 14,000 |
| Synthesis Example 15 | 40 | 28 | 8000 |
| Synthesis Example 16 | 40 | 27 | 9000 |
| Comp. Synth. Example 1 | 10 | 26 | 20,000 |
| Comp. Synth. Example 2 | 70 | 25 | Reaction unsustained |
| Comp. Synth. Example 3 | 40 | 26 | 9000 |
| Comp. Synth. Example 4 | 40 | 26 | 12,000 |
| Comp. Synth. Example 5 | 40 | 9 | Reacted unsustained |
| Comp. Synth. Example 6 | 40 | 48 | 16,000 |
| Comp. Synth. Example 7 | 40 | 26 | 2300 |
| Comp. Synth. Example 8 | 40 | 26 | 34,000 |

### Example 1

A dyeing quality improver was obtained by mixing 20 g of the polyester copolymer of Synthesis Example 1, 10 g of a 10 molar addition product of tristyrenated phenolethylene oxide and 70 g of water.

### Example 2

A dyeing quality improver was obtained by mixing 20 g of the polyester copolymer of Synthesis Example 1, 10 g of a 20 molar addition product of tristyrenated phenolethylene oxide and 70 g of water.

### Example 3

A dyeing quality improver was obtained by mixing 20 g of the polyester copolymer of Synthesis Example 1, 10 g of a 7 molar addition product of lauryl alcohol ethylene oxide and 70 g of water.

### Examples 4 and 5

A dyeing quality improver was obtained by the same procedure as in Examples 1 and 2, except that 20 g of the polyester copolymer of Synthesis Example 2 was used instead of 20 g of the polyester copolymer of Synthesis Example 1.

### Example 6

A dyeing quality improver was obtained by mixing 20 g of the polyester copolymer of Synthesis Example 2, 10 g of an 8 molar addition product of oleyl alcohol ethylene oxide and 70 g of water.

### Examples 7-20 and Comparative Examples 1-8

Dyeing quality improvers were obtained by the same procedure as in Example 1, except that 20 g of the polyester copolymers of Synthesis Examples 3-16 and Comparative Synthesis Examples 1-8 were used instead of 20 g of the polyester copolymer of Synthesis Example 1.

### Comparative Example 9

An aqueous dispersion was prepared comprising 30 mass% of a 10 molar addition product of tristyrenated phenolethylene oxide, for use as a dyeing quality improver.

### Comparative Example 10

An aqueous dispersion was prepared comprising 30 mass% of a 7 molar addition product of lauryl alcohol ethylene oxide, for use as a dyeing quality improver.

### Comparative Example 11

Water was used as a dyeing quality improver.

### Comparative Example 12

A mixture of 30 g of the polyester copolymer of Synthesis Example 1 and 70 g of water was used as a dyeing quality improver.

The obtained dyeing quality improvers were evaluated in the following manner.

### Oligomer removability test

For comparison of the oligomer removing effects during dyeing, polyester satin woven fabrics containing the dyeing quality improvers of Examples 1-20 and Comparative Examples 1, 3, 4 and 6-12 and dyed under the following conditions were subjected to extraction using 1,4-dioxane, and the UV absorbance of the extracts at 286 nm were measured to calculate the oligomer deposition per gram of fabric. The results are shown in Table 2.

| Dyeing bath | |
|---|---|
| Dye: C.I. Disperse Blue 79 | 1% o.w.f. |
| 80% Acetic acid | 1 g/L |
| Disperse level dyeing agent: | NICCA SUNSOLT RM-340E (Nicca |
| Chemical Co., Ltd.) | 1 g/L |
| Dyeing quality improver | 1 g/L |
| Dyeing temperature × time: | 130°C × 30 minutes |
| Liquor to goods ratio = | 1:15 |

### Scourability test (Dye contamination resistance test)

(1) In order to compare the scourability during dyeing, polyester knit greiges dyed under the following conditions using the dyeing quality improvers of Examples 1-20 or Comparative Examples 1, 3, 4 and 6-12 were extracted using diethyl ether. The extraction residue was dried at 105°C and allowed to stand in a desiccator, after which the mass was measured and the oil and fat content (mass%) was calculated with respect to the polyester knit greige. A larger oil and fat content indicates higher scourability.
(2) In order to compare the scourability during dyeing, two drops (0.2 g) each of an acrylic sizing agent ("PLUSSIZE J-96" by Goo Chemical Co., Ltd.) and wax (20 mass% aqueous dispersion of "PARAFFIN WAX 155°F" by Nippon Seiro Co., Ltd.) were spotted on the polyester knit, and then heat setting was performed at 160°C for 1 minute and the dyeing quality improvers of Examples 1-20 or Comparative Examples 1, 3, 4 and 6-10 were used for dyeing under the following conditions, after which the colored condition at the spotted areas were visually observed and the spot removability was evaluated as "G" (no spots), F (few spots) or P (spots). The spotted sections are darkly colored when residue of the acrylic sizing agent or wax remains. The evaluation results are shown in Table 2.

| Dyeing bath | |
|---|---|
| Dye: C.I. Disperse Red 60 | 0.2% o.w.f. |
| 80% Acetic acid | 1 g/L |
| Disperse level dyeing agent: | NICCA SUNSOLT RM-340E (Nicca |
| Chemical Co., Ltd.) | 1 g/L |
| Dyeing quality improver | 1 g/L |
| Dyeing temperature × time: | 130°C × 20 minutes |
| Liquor to goods ratio = | 1:15 |

### Foreign matter contamination resistance test

In order to compare the foreign matter contamination resistance effect during dyeing, a COLOR-PET (product of Nissen Corporation) was used to wrap a scoured polyester knit onto a holder, anchored above and below with rubber bands, and then a dyeing quality improver of Examples 1-20 or Comparative Examples 1, 3, 4 and 6-12 was added, a light fastness enhancer or flameproofing agent was further added as a functional agent, and the knit was dyed under the following conditions, after which the degree of foreign matter contamination remaining on the polyester knit was visually observed and the extent of foreign matter contamination was evaluated as G (no contamination), F (some contamination) or P (notable contamination). The results are shown in Table 2.

| Dyeing bath | |
|---|---|
| Dye: C.I. Disperse Red 167 | 0.1% o.w.f. |
| 80% Acetic acid | 1 g/L |
| Disperse level dyeing agent: | NICCA SUNSOLT RM-340E (Nicca |
| Chemical Co., Ltd.) | 1 g/L |

| Functional agent | |
|---|---|
| Light fastness enhancer: | SANLIFE LP-240 (product of Nicca |
| Chemical Co., Ltd.) | 6% o.w.f. |
| or | |
| Flameproofing agent: | NIKKAFINON HFT-4000 GT (product of |
| Nicca Chemical Co., Ltd.) | 15% o.w.f. |
| Dyeing quality improver | 1 g/L |
| Dyeing temperature × time: | 130°C × 30 minutes |
| Liquor to goods ratio = | 1:30 |

**Table 2**

| | Oligomer adhesion (mg/g) | Scourability test | | | Foreign matter contamination resistance | |
|---|---|---|---|---|---|---|
| | | Fats and oils (%) | Acrylic sizing agent spots | Wax spots | Light fastness enhancer | Flameproof ing agent |
| Example 1 | 4.8 | 0.06 | G | G | G | G |
| Example 2 | 3.2 | 0.06 | G | G | G | G |
| Example 3 | 7.4 | 0.08 | G | G | G | G |
| Example 4 | 5.3 | 0.07 | G | G | G | G |
| Example 5 | 4.5 | 0.07 | G | G | G | G |
| Example 6 | 7.8 | 0.08 | G | G | G | G |
| Example 7 | 6.0 | 0.08 | G | G | G | G |
| Example 8 | 6.1 | 0.07 | G | G | G | G |
| Example 9 | 13.0 | 0.09 | G | G | G | G |
| Example 10 | 10.3 | 0.07 | G | G | G | G |
| Example 11 | 6.8 | 0.08 | G | G | G | G |
| Example 12 | 6.1 | 0.08 | G | G | G | G |
| Example 13 | 6.0 | 0.08 | G | G | G | G |
| Example 14 | 5.8 | 0.07 | G | G | G | G |
| Example 15 | 6.2 | 0.07 | G | G | G | G |
| Example 16 | 5.8 | 0.07 | G | G | G | G |
| Example 17 | 5.2 | 0.07 | G | G | G | G |
| Example 18 | 6.8 | 0.08 | G | G | G | G |
| Example 19 | 6.1 | 0.07 | G | G | G | G |
| Example 20 | 6.4 | 0.07 | G | G | G | G |
| Comp. Ex. 1 | 24.8 | 0.2 | F | F | P | P |
| Comp. Ex. 3 | 25.7 | 0.23 | P | P | F | F |
| Comp. Ex. 4 | 18.5 | 0.15 | F | G | G | G |
| Comp. Ex. 6 | 26.5 | 0.14 | F | G | G | P |
| Comp. Ex. 7 | 28.0 | 0.17 | P | P | P | P |
| Comp. Ex. 8 | 9.5 | 0.14 | G | G | G | G |
| Comp. Ex. 9 | 28.8 | 0.25 | P | P | P | P |
| Comp. Ex. 10 | 29.0 | 0.23 | P | P | P | P |
| Comp. Ex. 11 | 29.0 | 1.91 | P | P | P | P |
| Comp. Ex. 12 | 9.7 | 0.10 | F | G | G | G |

### Dye dispersibility test

For comparison of the dye dispersibilities during dyeing, a scoured polyester knit was wrapped around the holder of a CARAPET (Nissen Corporation) and anchored above and below with rubber bands, and this was dyed under the conditions described below using a dyeing quality improver of Examples 1-20 or Comparative Examples 1, 3, 4 and 6-12, after which the extent of casing spots left on the polyester knit were visually observed and the dye dispersibility was evaluated on a 5-level scale, from 5 (no casing spots) to 1 (numerous casing spots). The results are shown in Table 3.

| Dyeing bath | |
|---|---|
| Dye: C.I. Disperse Red 167 | 2% o.w.f. |
| 80% Acetic acid | 1 g/L |
| Disperse level dyeing agent: | NICCA SUNSOLT RM-340E (Nicca |
| Chemical Co., Ltd.) | 1 g/L |
| Dyeing quality improver | 1 g/L |
| Dyeing temperature × time: | 115°C × 1 minute |
| Liquor to goods ratio = | 1:30 |

### Persistence test

For comparison of the persistences of the dyeing quality improvers onto dyed fabrics, polyester satin woven fabrics dyed under the same dyeing conditions as in the oligomer removability test described above were dried at 120°C × 1 minute and then heat treated at 180°C × 30 seconds. After then cooling to room temperature, a single drop of water was dropped onto the fabric and the time until complete permeation of the water drop from the fabric surface was measured. Lower water absorption was judged as less dyeing quality improver residue. The results are shown in Table 3.

### Processing suitability test

For comparison of the processing suitability for dyeing, a high-temperature, high-pressure jet dyeing machine (MINI-JET D-100 by Texam Co., Ltd.) was used, placing a polyester pongee in a treatment bath containing the dyeing quality improver of one of Examples 1-20 or Comparative Examples 1, 3, 4 and 6-12, under the conditions described below, and the condition of bubbles between 60-130°C with a heating rate of 3°C/min was compared to Comparative Example 11 wherein the dyeing quality improver was water. The evaluation was conducted on a 3-level scale of G (equivalent to Comparative Example 11), F (more foaming than Comparative Example 11) and P (considerably more foaming than Comparative Example 11), and the samples with low foaming were judged as satisfactory. The results are shown in Table 3.

| Treatment bath | |
|---|---|
| 80% Acetic acid | 1 g/L |
| Disperse level dyeing agent: | NICCA SUNSOLT RM-340E (Nicca |
| Chemical Co., Ltd.) | 1 g/L |
| Dyeing quality improver | 1 g/L |
| Liquor to goods ratio = | 1:30 |

**Table 3**

| | Dye dispersibility | Residual property (sec) | Processing suitability |
|---|---|---|---|
| Example 1 | 5 | 180 < | G |
| Example 2 | 5 | 180 < | G |
| Example 3 | 5 | 180 < | G |
| Example 4 | 5 | 180 < | G |
| Example 5 | 5 | 180 < | G |
| Example 6 | 5 | 180 < | G |
| Example 7 | 5 | 180 < | G |
| Example 8 | 5 | 180 < | G |
| Example 9 | 5 | 180 < | G |
| Example 10 | 5 | 180 < | G |
| Example 11 | 5 | 180 < | G |
| Example 12 | 5 | 180 < | G |
| Example 13 | 5 | 180 < | G |
| Example 14 | 5 | 180 < | G |
| Example 15 | 5 | 180 < | G |
| Example 16 | 5 | 180 < | G |
| Example 17 | 5 | 180 < | G |
| Example 18 | 5 | 180 < | G |
| Example 19 | 5 | 180 < | G |
| Example 20 | 5 | 180 < | G |
| Comp. Ex. 1 | 5 | 180 < | G |
| Comp. Ex. 3 | 5 | 180 < | G |
| Comp. Ex. 4 | 2 | 180 < | F |
| Comp. Ex. 6 | 2 | 180 < | P |
| Comp. Ex. 7 | 5 | 180 < | G |
| Comp. Ex. 8 | 5 | 30 | G |
| Comp. Ex. 9 | 2 | 180 < | G |
| Comp. Ex. 10 | 2 | 180 < | G |
| Comp. Ex. 11 | 5 | 180 < | G |
| Comp. Ex. 12 | 5 | 180 < | G |

As seen by the results in Tables 2 and 3, the dyeing quality improvers of the examples of the invention were able to minimize trouble caused by oligomers and problems such as dye contamination and foreign matter contamination without affecting the dyeing quality, and also exhibited good processing suitability evidenced by low foaming during processing.

### Industrial Applicability

Using a dyeing quality improver according to the invention can yield fiber products with satisfactory quality and no processing defects arising from deposition of oligomers, dye contamination or foreign matter contamination, while permitting more economical dyeing of fiber products by reducing the extent of foaming during processing, thus leading to less frequent occurrence of troubles during processing.

## Claims

1. A dyeing quality improver for polyester-based fiber materials **characterized by** comprising (A) a polyester copolymer, obtained by polycondensation of a dibasic acid component containing a dibasic acid with a sulfonate group in an amount of 15-65 mol% and a dihydric alcohol component containing polyethylene glycol with a molecular weight of 900-3500, having a molecular weight of 3000-30,000 and containing polyoxyethylene chains in the molecule in an amount of 10-40 mass%, and (B) at least one compound selected from among styrenated phenolalkylene oxide addition products and higher alcohol alkylene oxide addition products.
